Europäisches Patentamt

European Patent Office

Office européen des brevets

(19)

(11) Publication number: **0 163 848**
**A1**

(12)

# EUROPEAN PATENT APPLICATION

(21) Application number: **85104167.3**

(22) Date of filing: **04.04.85**

(51) Int. Cl.⁴: **F 21 S 11/00**

(30) Priority: **28.05.84 JP 107978/84**

(43) Date of publication of application: **11.12.85**
**Bulletin 85/50**

(84) Designated Contracting States: **CH DE FR GB IT LI NL SE**

(71) Applicant: **Mori, Kei, 3-16-3-501, Kaminoge, Setagaya-ku Tokyo (JP)**

(72) Inventor: **Mori, Kei, 3-16-3-501, Kaminoge, Setagaya-ku Tokyo (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) A sunshine illuminating device.

(57) A sunshine illuminating device for supplying solar rays to the courtyard of a hollow rectangular or open-ended rectangular building (100). The sunshine illuminating device is comprised of solar ray collecting devices (10) installed at each side or corner of the rooftop of the building and is further comprised of flood light projectors (20) corresponding to the solar ray collecting devices. Solar rays collected by the solar ray collecting device being transmitted to the flood light projectors, and the flood light projector being employed for illuminating so as to scan the courtyard of the building or each side or corner portion opposed thereto.

A SUNSHINE ILLUMINATING DEVICE  0163848

## BACKGROUND OF THE INVENTION

The present invention relates to a sunshine illuminating device, in particular a sunshine illuminating device for supplying solar rays to the courtyard of a hollow rectangular or open-ended rectangular building.

In a building for use as a dwelling, a corridor is provided for each floor. If the building is constructed in a hollow rectangular or open-ended rectangular form and a corridor is provided along the courtyard side, the length of the corridor will be shorter so that it will be possible to decrease the cost of the construction.

For these reasons, in recent years, hollow rectangular or open-ended rectangular buildings have become the object of public attention. However, in the case of constructing a building in a hollow rectangular or open-ended rectangular form, the corridor will face the courtyard side, the north side, the west side, or the east side. As a consequence, the solar rays will not reach the corridor portion, the corridor side will not be utilized fully and will not be maintained properly.

## SUMMARY OF THE INVENTION

It is an object of the present invention to provide a sunshine illuminating device capable of supplying solar rays to shady areas.

It is another object of the present invention to provide a sunshine illuminating device for supplying solar rays to the courtyard of a hollow rectangular or open-ended rectangular building.

It is another object of the present invention to provide a sunshine illuminating device for supplying solar rays to a corridor portion facing a shady courtyard.

Another object of the present invention is to provide a sunshine illuminating device for nurturing plants or the like in a courtyard and thereby improve the atmosphere of a building.

The above-mentioned features and other advantages of the present invention will be apparent from the following detailed description which goes with the accompanying drawings.

## BRIEF DESCRIPTION OF THE DRAWINGS

Fig. 1 is a plan view showing an embodiment of the illuminating device according to the present invention;

Fig. 2 is a perspective view showing the outline of the entire building;

Fig. 3 is a perspective view showing an embodiment of the solar ray collecting device employed for putting the present invention into effect; and

Fig. 4 is a cross-sectional construction view showing an embodiment of the flood light projector.

## DESCRIPTION OF THE PREFERRED EMBODIMENT

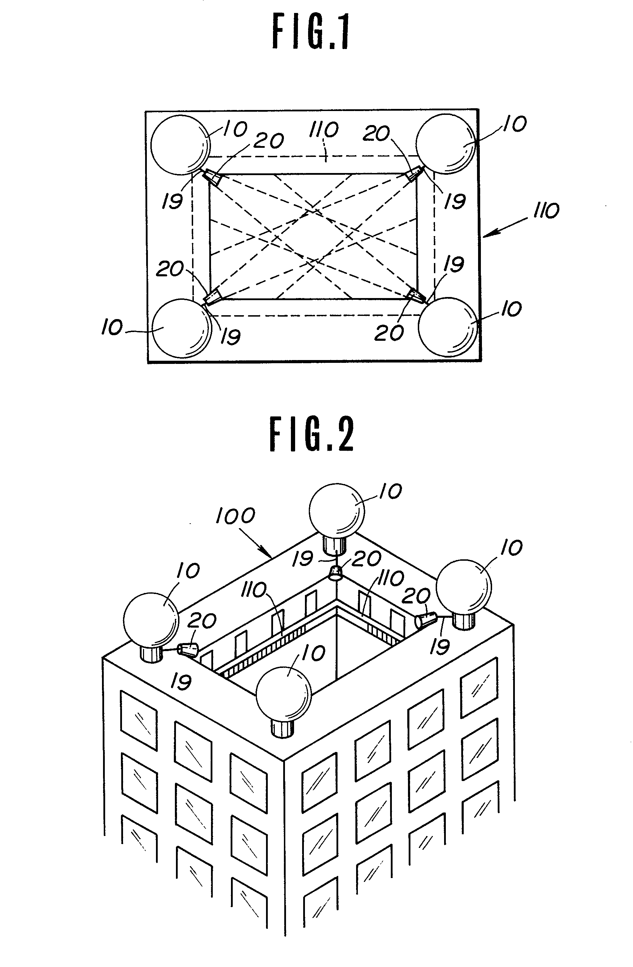

Fig. 1 is a plan view for explaining an embodiment of a sunshine illuminating device according to the present invention.

2

Fig. 2 is a perspective view of the same. In Figs. 1 and 2, 100 is a hollow rectangular building and a corridor 110 is provided along the courtyard side of the building 100. However, the solar rays do not arrive at the corridor side as previously mentioned. For this reason, the corridor side cannot be used fully and cannot be maintained adequately.

In Figs. 1 and 2, 10 is a solar ray collecting device and 20 is a flood light projector. Solar rays collected by the solar ray collecting device 10 are guided into an optical conductor and transmitted through it to the flood light projector 20. Then the solar rays are projected from the flood light projector into the dark corridor. Consequently, it may be possible to cultivate plants or the like in the corridor and therefore the courtyard side of the hollow rectangular building can be kept clean.

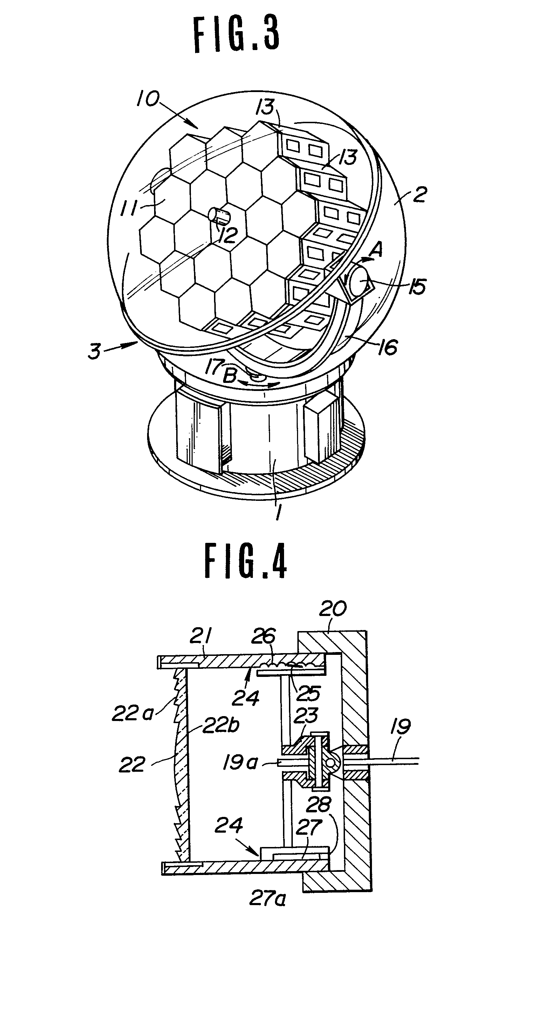

Fig. 3 is a perspective view showing an embodiment of the above-mentioned solar ray collecting device. In Fig. 3, 1 is a cylindrical foundation and 2 is a transparent dome-shaped head portion. A capsule 3 for accommodating the solar ray collecting device is constructed with a cylindrical foundation and a transparent dome-shaped head. At the time of use, the solar ray collecting device 10 is accommodated in the capsule 3 as shown in Fig. 3.

The solar ray collecting device 10 is comprised of a large number of, for instance, nineteen concentrically-arranged lenses 11 for focusing solar rays, a solar ray direction sensor 12 for detecting the direction of the sun, a support frame 13 for unitarily supporting the lenses 11 and the sensor 12, a first motor 15 for rotating them in direction A, a support arm 16 for

3

supporting the lenses, the sensor, the support frame, and the first motor, a rotating shaft 17 set up so as to intersect with the rotating shaft of the motor 15 which is perpendicular to it and a second motor, not shown in Fig. 3, for turning the rotating shaft 17 in direction B. The direction of the sun is detected by use of the solar ray sensor 12. The detection signal generated from the sensor 12 controls the afore-mentioned first and second motors so as to always direct the lenses toward the sun. Under such conditions the solar rays focused by the lens 11 are guided into an optical conductor cable, the light-receiving edge of which is positioned at the focal point of the lens 11 and further transmitted through the optical conductor cable to a flood light projector 20.

Fig. 4 is a cross-sectional view for explaining an embodiment of the afore-mentioned flood light projector 20. In Fig. 4, 20 is an optical conductor support member for supporting an optical conductor cable 19 of the solar ray collecting device 10, into which the solar rays are guided, and 21 is a Fresnel lens support member for supporting a Fresnel lens 22 and for diffusing the light rays emitted from the light-emitting edge surface 19a by use of the Fresnel lens 22. The Fresnel lens support member 21 is supported so as to move in an inclined way by means of a well-known universal joint 23, keeping constant the optical relation against the light-emitting edge surface 19a of the optical conductor cable 19. Furthermore it is mounted so as to be able to adjust the distance between the Fresnel lens and the light-emitting edge surface 19a of the optical conductor cable 19 by means of a spring 25 of a sliding

4

0163848

portion 24 and a recess portion 26 for stopping the return which engages with the spring 25.

However, on that occasion, when the distance between the Fresnel lens 22 and the light-emitting edge surface 19a exceeds the focal distance of the Fresnel lens 22, the light rays passing through the Fresnel lens 22 are focused on a spot and therefore a concentration of the light energy occurs. It is dangerous. For instance, as shown in Fig. 4, a groove 27 and a sliding projection 28 sliding in the groove 27 are provided in the sliding portion 24. The sliding projection 28 abuts on the edge portion 27a of the groove 27. In such a construction, the distance between the Fresnel lens 22 and the light-emitting edge surface 19a of the optical conductor 19 is prevented from exceeding the focal distance of the Fresnel lens 22.

Furthermore, in the case of the Fresnel lens, radiation of the light rays passing through the Fresnel lens differs in accordance with each case, that is the surface admits the light rays. As shown in Fig. 4, when a flat surface 22b of the Fresnel lens 22 admits the light rays, the Fresnel lens 22 diffuses them just like the action of a usual lens. On that occasion, the profile of the projected light rays is unclear. On the contrary, when the lens surface 22a of the Fresnel lens 22 admits the light rays by exchanging the front surface of the lens 22 for the rear surface of the same, the profile of the light rays projected through the lens 22 turns out to be clear.

On that occasion, whether the light source of the clear profile can be employed preferably to that of an unclear profile differs according to the condition at the time. Therefore, as

5

shown in Fig. 4, if the Fresnel lens 22 can be set in the Fresnel lens support member 21 by exchanging the front surface of the lens 22 for the rear surface of the same, the desired projection of light can be decided.

Furthermore, in the afore-mentioned embodiment, the flood light projector is established at the corner portion of the building for illuminating the corner portion of the courtyard opposed to the flood light projector. Because it is easy to install a plant fence for cultivating potted plants at the corner portion of the corridor or to let ivy creep thereupon, it is not always necessary to illuminate that corner portion. Instead, it is possible to illuminate the side (or linear) portion as a matter of course.

In the case of cultivating plants, repeating "a bright period" and "a dark period" alternately may be better for effectively nurturing plants than by continuously illuminating. When the flood light projector 20 is inclined and moved up-and-down as well as to the left-and-right, so as to scan the place to be illuminated, plants can be cultivated more effectively.

Heretofore the case applying to a hollow rectangular building has been described. However, the present invention is not limited to the above-mentioned embodiment. It may be easily understood that the present invention can also be applied to an open-ended rectangular building.

As is apparent from the foregoing description, according to the present invention, solar rays can be supplied to a shaded area of a hollow rectangular or open-ended rectangular building, especially a corridor portion facing a shady courtyard.

Therefore, it may be possible to nurture plants or the like in a courtyard and thereby improve the atmosphere of a building. Furthermore, in a building for use as a dwelling, older people can enjoy cultivating potted plants.

0163848

A sunshine illuminating device comprising a solar ray collecting device installed on the rooftop of a hollow rectangular or an open-ended rectangular building which projects solar rays collected by said solar ray collecting device onto the courtyard of said hollow rectangular or open-ended rectangular building, is characterized in that said sunshine illuminating device is comprised of solar ray collecting devices installed at each side or corner of the rooftop of the building and is further comprised of flood light projectors corresponding to said solar ray collecting devices, said solar rays collected being transmitted to said flood light projectors, and said flood light projector being employed for illuminating so as to scan said courtyard of the building or each side or corner portion opposed thereto.

0163848

# FIG.1

# FIG.2

# FIG.3

# FIG.4

European Patent
Office

**EUROPEAN SEARCH REPORT**

0163848

EP  85 10 4167

## DOCUMENTS CONSIDERED TO BE RELEVANT

| Category | Citation of document with indication, where appropriate, of relevant passages | Relevant to claim |
|---|---|---|
| A | EP-A-0 085 942  (MORI, KEI) <br> * Figure 1 * | 1 |
| | --- | |
| A | EP-A-0 055 860  (MORI, KEI) <br> * Page 6, lines 25-29; figure 2 * | 1 |
| | --- | |
| A | US-A-4 349 245  (KLIMAN) <br> * Figure 1 * | 1 |
| | --- | |
| A | US-A-3 882 306  (ARMSTRONG) <br> * Column 2, lines 5-14 * | 1 |
| | ----- | |

**CLASSIFICATION OF THE APPLICATION (Int. Cl.4)**

F 21 S   11/00

**TECHNICAL FIELDS SEARCHED (Int. Cl.4)**

F 21 S
F 21 V

The present search report has been drawn up for all claims

| Place of search | Date of completion of the search | Examiner |
|---|---|---|
| THE HAGUE | 29-08-1985 | FOUCRAY R.B.F. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03.82